(19) **Europäisches Patentamt / European Patent Office / Office européen des brevets**

(11) **EP 1 654 314 B1**

(12) **EUROPEAN PATENT SPECIFICATION**

(45) Date of publication and mention
of the grant of the patent:
**25.03.2015 Bulletin 2015/13**

(51) Int Cl.:
***C08K 5/372*** (2006.01)   ***B60C 1/00*** (2006.01)
***C08J 5/18*** (2006.01)

(21) Application number: **04780739.1**

(22) Date of filing: **11.08.2004**

(86) International application number:
**PCT/US2004/025954**

(87) International publication number:
**WO 2005/017020 (24.02.2005 Gazette 2005/08)**

(54) **NON-STAINING BLACK SIDEWALL**

NICHT VERFÄRBENDE SCHWARZE SEITENWAND

PAROI NOIRE NON TACHANTE

(84) Designated Contracting States:
**AT BE BG CH CY CZ DE DK EE ES FI FR GB GR
HU IE IT LI LU MC NL PL PT RO SE SI SK TR**

(30) Priority: **11.08.2003 US 494374 P**

(43) Date of publication of application:
**10.05.2006 Bulletin 2006/19**

(73) Proprietor: **Bridgestone/Firestone North
American Tire, LLC
Nashville, Tennessee 37214 (US)**

(72) Inventors:
- **LANZAROTTA, Joseph
  Uniontown, OH 44685 (US)**
- **DONOHUE, Derek
  Heathrow, FL 32746 (US)**

(74) Representative: **Oxley, Robin John George et al
Marks & Clerk LLP
90 Long Acre
London WC2E 9RA (GB)**

(56) References cited:
**EP-A- 0 943 466       DE-A- 3 501 697
US-A1- 2001 051 677**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 654 314 B1

**Description**

Field of the Invention

The present invention relates to rubber compositions and pneumatic tires using the same, and more particularly to a rubber composition for a tire component exposed to atmospheric conditions capable of maintaining a desirable appearance. Additionally, this invention provides a process for forming a protective film on the surface of a vulcanized rubber composition.

Background of the Invention

Due to the nature of the elastomers used in rubber compounding, antidegradants are typically included in a rubber formulation to prevent atmospheric attack of the rubber compound. Elastomers having unsaturation in the polymer backbone are particularly vulnerable to ozone attack. In order to prevent the reaction between atmospheric ozone, and the polymer backbone, materials which are considered "antiozonants" are commonly used, and may include materials which bloom to the rubber surface, preventing reaction of atmoshperic ozone with the polymer. Certain waxes are known to migrate to the rubber surface, forming an inert film that provides a layer of protection to the rubber from atmospheric ozone. Other known antiozonants include chemicals that inhibit crack formation or minimize the rate of crack growth.

A drawback to these types of antiozonants is their effect on the appearance of the rubber surface. Wax films may cause the surface to appear dull, or hazy, while other antiozonants may cause a yellow to brown discoloration of the rubber surface, or staining of adjacent rubber surfaces to which they are in contact.

Previous attempts have been made to identify materials that prevent atmospheric attack of a rubber compound, while impacting a desirable appearance to the outer surface of the rubber. Particularly, US 6,554,037 describes a rubber compound comprising the combination of an oxy radical containing polymer of a specific structure, and an alkali metal salt of an alkylsulphonic or alkylsulphuric acid. Additionally, US 6,598,632 describes a rubber compound containing a polymer having an oxy radical, a polyoxyalkylene block of a specified formula and an end-group alcohol functionality. U.S. Application No. 10/133,546 describes rubber compositions including a carboxylic acid ester of a polyhydroxy alcohol of a specific formula.

Summary of the Invention

Presently, there is a need in the art for rubber compositions that are protected from atmospheric ozone attack, yet remain aesthetically pleasing. These compositions must also be cost effective from both material and manufacturing perspectives.

Applicants have discovered that the addition of a sulfur containing surfactant to a rubber formulation results in a rubber compound having a glossy film on the outer, exposed surface. Additionally, applicants have discovered that this film does not inhibit the ability of antidegradants within the compound to protect the rubber from atmospheric attack. Although not limited to this theory, this film appears to mask the appearance of such antidegradants on the outer surface of the rubber compound.

One aspect of the present invention is a rubber composition, and tires made therefrom, comprising a surfactant or combination of surfactants, wherein at least one surfactant contains a sulfur atom.

Another aspect of the present invention is a rubber compound, and tires made therefrom, comprising a surfactant containing a sulfur atom and excluding alkali metal salt of an alkylsulphonic or alkylsulphuric acid.

Another aspect of the present invention is a rubber compound, and tires made therefrom, comprising a surfactant containing a sulfur atom and excluding a polymer comprising an oxy group having linked to at least one side a polyoxyalkylene block of the formula $(C_nH_{2n}O)_x$ and wherein at least one block is linked to a hydrogen atom which is located at the chain end of said polymer.

Another aspect of the present invention is a rubber compound, and tires made therefrom, comprising a surfactant containing a sulfur atom and a reduced amount of wax or softeners, such as oils.

An additional aspect of the present invention is a rubber compound and tire made therefrom, comprising a sulfur-containing surfactant, and excluding silica filler.

The present invention further provides a vulcanized tire sidewall comprising based on 100 parts of elastomer about 0.02-10 parts of a surfactant containing a thioether functionality, wherein the sidewall is exposed to ozone.

The present invention further provides a tire comprising a vulcanized sidewall comprising based on 100 parts of elastomer about 0.02 - 10 parts of a surfactant containing a thioether functionality, wherein the sidewall component is exposed to ozone.

The present invention further provides a method of forming a film on the exposed surface of the vulcanized tire sidewall defined above, comprising: adding about 0.02-10 parts of a surfactant containing a thioether functionality to a rubber composition, curing said rubber composition, exposing the cured rubber composition to ozone.

The surfactant preferably excludes alkali metal salt of an alkylsulphonic or alkylsulphuric acid.

The rubber compound preferably excludes a polymer comprising an oxy group having linked to at least one side a polyoxyalkylene block of the formula $(C_nH_{2n}O)_x$ and wherein at least one block is linked to a hydrogen atom which is located at the chain end of said polymer.

The rubber compound preferably contains a reduced amount of wax or softeners, such as oils.

The rubber compound preferably excludes silica filler.

The term surfactant, as used herein, refers to a soluble compound that reduces interfacial tension between two liquids or a liquid and a solid. These types of surfactants may also be considered plasticizers and/or softeners within the art of rubber compounding.

Brief Description of the Drawings

Fig. 1 is a plot of staining (b) of a rubber surface versus the amount of time such samples were exposed to ozone.
Fig. 2 is a plot of Gloss Development (Gloss dE) of rubber samples versus the number of hours the samples were in the ozone chamber.

Embodiments of the Invention

Elastomers for Rubber Compounds

Elastomers used in the present invention include the following, individually as well as in combination, according to the desired final viscoelastic properties of the rubber compound: Natural Rubber, Polyisoprene Rubber, Styrene Butadiene Rubber, Polybutadiene Rubber, Butyl Rubbers, Halobutyl Rubbers, Crosslinked Polyethylene, Neoprenes, Chlorinated Polyethylene Rubbers and Silicone Rubbers, These elastomers may contain a variety of functional groups, including tin, silicon and amine containing functional groups.

Preferred elastomers include, natural rubber, synthetic isoprene, styrenebutadiene copolymers, and butadiene rubber because of their common usage in the tire industry.

The ratios (often expressed as adding up to 100 parts) of such polymer blends can range across the broadest possible range according to the need of final viscoelastic properties desired for the polymerized rubber compound. One skilled in the art, without undue experimentation, can readily determine which elastomers in what amount is appropriate for a resulting desired viscoelastic property range.

Fillers

The elastomeric compositions of the invention are preferably compounded with reinforcing fillers, such as carbon black, silica, or mixtures thereof Although carbon black is the preferred filler, it may be used exclusively or in combination with silica and or other non-reinforcing fillers.

The elastomers can be compounded with all forms of carbon black. The carbon black can be present in amounts ranging from about 0 to about 80 phr, with about five to about 60 phr being preferred. The carbon black can include any of the commonly available, commercially-produced carbon blacks, but those having a surface area (EMSA) of at least about 20 $m^2$/g and, more preferably, at least about 35 $m^2$/g up to about 200 $m^2$/g or higher are preferred. Surface area values used in this application are determined by ASTM D-1765 using the cetyltrimethyl-ammonium bromide (CTAB) technique.

Among the useful carbon blacks are furnace black, channel blacks and lamp blacks. More specifically, examples of useful carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which can be utilized include acetylene blacks.

A mixture of two or more of the above blacks can be used in preparing the carbon black products of the invention. Preferred are SAF, HAF or GPF type carbon blacks. The carbon blacks utilized in the preparation of the vulcanizable elastomeric compositions of the invention can be in pelletized form or an unpelletized flocculent mass.

Examples of suitable silica reinforcing filler include precipitated amorphous silica, wet silica (hydrated silicic acid), dry silica (anhydrous silicic acid), fumed silica, calcium silicate, and the like. Other suitable fillers include aluminum silicate, magnesium silicate, and the like. For purposes of the present invention, the surface area of the silicas should be about 32 $m^2$/g to about 400 $m^2$/g, with the range of about 100 $m^2$/g to about 250 $m^2$/g being preferred, and the range

of about 150 m$^2$/g to about 220 m$^2$/g being most preferred. The pH of the silica filler is generally about 5.5 to about 7 or slightly over, preferably about 5.5 to about 6.8.

Silica can be employed in the amount of about 0 to about 100 parts by weight per hundred parts of the elastomer (phr), preferably in an amount of about five to about 80 phr and, more preferably, in an amount of about 30 to about 80 phr. The useful upper range is limited by the high viscosity imparted by fillers of this type. Some of the commercially available silicas which can be used include Hi-Sil® 190, Hi-Sil® 210, Hi-Sil® 215, Hi-Sil® 233, Hi-Sil® 243, produced by PPG Industries (Pittsburgh, PA). A number of useful commercial grades of different silicas are also available from Degussa Corporation (Piscataway, NJ) (*e.g.*, VN2, VN3), Rhone Poulenc (e.g., Zeosil® 1165MP), and J.M. Huber Corporation (Edison, NJ).

When both carbon black and silica are employed in combination as the reinforcing filler, they are often used in a carbon black-silica ratio of about 10:1 to about 1:4.

Surfactants

The selection of a surfactant according to the present invention is based on the desired visual and viscoelastic performance of the resulting compound.

The surfactants of the present invention is a thioether compound, and most desirably the surfactant is an ether thioether of Formula 1:

$$H_9C_4\text{-}(O\text{-}CH_2\text{-}CH_2)_n\text{-}O\text{-}CH_2\text{-}CH_2\text{-}S\text{-}CH_2\text{-}O\text{-}(CH_2\text{-}CH_2\text{-}O\text{-})_n\text{-}C_4H_9$$

Two examples of ether thioether surfactants are Vulkanol ® 85 and Vulkanol ® OT, with the former being preferred, and both being produced by Bayer Corporation.

The amount of surfactant to be mixed into the vulcanizable rubber compound depends on the desired final appearance, as well as other environmental considerations such as expected ozone exposure. The amount of surfactant ranges from about 0 to about 10 phr, and preferably from about 0.5 to about 5 phr (parts per hundred rubber -- where "hundred rubber" means 100 parts of elastomer(s)).

Additional and Optional Ingredients

Additional rubber compounding ingredients may include curing packages, processing aids, antioxidants and antiozonants, coupling agents, and the like. Without undue experimentation and utilizing patent and technical literature, one skilled in the art can develop a variety of specific vulcanizable rubber compounds for subsequent construction and vulcanization according to the specific rubber product desired.

For example compounds of the present invention will typically also contain such additional ingredients in the following amounts:

fillers: from about 0 to about 150 phr, and preferably from about 30 to about 80 phr;
processing oils/aids: from about 0 to about 75 phr, and preferably from about 0 to about 40 phr;
antidegradants: from about 0 to about 10 phr, and preferably from about 0 to about 5 phr;
stearic acid: from about 0 to about 5 phr, and preferably from about 0 to about 3phr;
zinc oxide: from about 0 to about 10 phr, and preferably from about 0 to about 5 phr;
sulfur: from about 0 to about 10 phr, and preferably from about 0 to about 4 phr;
accelerators: from about 0 to about 10 phr, and preferably from about 0 to about 5 phr; and

Usefulness of the Invention

The addition of a surfactant containing a thioether functionality to a rubber composition unexpectedly results in rubber surfaces, that when exposed to ozone, form a glossy film on the exposed surface.

While not being limited to a particular theory, the use of a surfactant containing a thioether functionality in rubber compounds addresses a problem that conventional rubber compounds have, namely: discoloration of rubber surfaces exposed to atmospheric ozone. In this invention, the addition of certain surfactants results in compounds that while maintaining ozone protection, have an attractive exterior surface.

Further embodiments of the invention are described in the following examples.

Examples

General Experimental Testing Procedures

1. Rheometer

A Rheometer is used to determine the cure characteristics of compounded rubbers. The procedure used to measure the cure of rubber samples as reported' in the current invention follows ASTM D 2084. The sample size was 30 mm in diameter and 12.5 mm in thickness or equivalent to a volume of 8 cm$^3$. The equipment used was a Monsanto Rheometer Model MDR2000.

2. Modulus, Tensile Strength and Elongation at Break

Modulus, Tensile Strength (Stress at Maximum Strain) and Elongation at Break are measured generally according to ASTM D 412 (1998) method B. Vulcanized rubber test specimens are cut into the shape of a ring, using a D412 B Type 1 die. The measurements for the above properties are based on the original cross sectional area of the test specimen. An instrument equipped to produce a uniform rate of grip separation, such as an Instron tensile tester, with a suitable dynamometer and an indicating or recording system for measuring applied force is used in conjunction with a measurement of extension of the test specimen. Modulus (100% (M100) and 300% (M300)), tensile strength (TB) and elongation (EB) are calculated according to the calculations set forth in ASTM D412 (1998).

3. Rebound

Rebound, the resilience of a rubber sample based on the ratio of returned to delivered energy, is measured generally according to test method ASTM D1054-91 (2000). A rubber sample is milled and cured according to ASTM D 1054, using the mold specified. The cured sample is then coated with talc, prior to conditioning. The sample is conditioned in an oven set at the requested temperature for approximately 1 hour. The conditioned sample is placed into a Zwick type rebound tester, such that a pendulum is swung against the sample, and the angle which it bounces back is measured. The percentage rebound is calculated using the equation found in D1054-91(2000).

4. Ozone Testing (Bent Loop)

Bent loop surface ozone cracking helps to estimate a material's resistance to ozone. A 2.54 cm x 2.54 cm x 1.91 mm to 2.54 mm strip is cut with the grain from the material to be tested. This rubber strip is then cut into two (2) samples that are 7.62 cm long. The samples are labeled and marked with a 4.44 cm bench mark and then each sample is folded in the middle, and the ends are clamped together with a large binder clip. Next, the samples are attached to a rod, so they will be in an upright position during the test sequence.

The samples are placed into the ozone chamber for seven (7) days. The ozone chamber is kept at 50 parts of ozone to 100 million parts of air and at a temperature of 37.8°C ± 1°C. The samples are checked daily for cracking. The time of the first signs of cracking is recorded. The samples are taken out of the chamber on the seventh day and visually inspected for the extent of cracking.

5. Color and Gloss

Color and Gloss are determined by the use of a Minolta CM2600D Spectrophotometer, calibrated according to the manufacturer's standards. Tires are exposed to 25 parts ozone per hundred million air while spinning on a tire drum. For this purpose, an ozone box, OREC model 0500/DM100 and ozone monitor,® OREC model O3DM100 are used. At various points in time, the spinning tires are stopped, and spectrophotometer measurements are taken. These measurements, L, a and b describe 3 axes, and identify a unique color. The vector difference between two colors, dE, can be calculated as follows:

$$dE = \sqrt{((L_1-L_2)^2 + (a_1-a_2)^2 + (b_1-b_2)^2}$$

Gloss is defined as the spectral reflectance produced by light hitting a surface, and can be expressed as the vectoral difference between the absolute color spectral component included of an object and the color reflected from its surface at a 10° angle.

<u>General Experimental Materials Examples</u>

In these Examples, rubber compounds containing varying amounts of a polyether thioether surfactant are compared to a compound without such surfactant.

**Examples 1-5, and Comparative Example A**

Comparative Example A (Comp. A) was representative of a carbon black filled sidewall composition. Experimental Examples 1-5, (Exp. 1-5) were modified versions of this compound, each containing from 0.5 to 3.0 parts per hundred rubber (phr) Vulkanol ® 85.

Each of these examples were mixed in two mix stages. For the first non-productive mix stage, the ingredients were mixed for approximately 120 seconds to a temperature of about 155°C. The resulting rubber composition was then mixed with sulfur curatives, accelerators, antioxidants and optionally Vulkanol ® 85 to a maximum temperature of about 77°C, for about 145 seconds in a final, productive mix stage.

Table 1 contains the formulations for each of Comparative Example A and Experimental Examples 1-5.

| Table 1 | | | | | | |
|---|---|---|---|---|---|---|
| Materials | Comp. A | Exp. 1 | Exp.2 | Exp. 3 | Exp. 4 | Exp. 5 |
| Masterbatch #1 | | | | | | |
|    Butadiene Rubber | 60 | 60 | 60 | 60 | 60 | 60 |
|    Natural Rubber | 40 | 40 | 40 | 40 | 40 | 40 |
|    Processing Aids | 17 | 17 | 17 | 17 | 17 | 17 |
|    Wax | 2 | 2 | 2 | 2 | 2 | 2 |
|    Carbon Black[1] | 55 | 55 | 55 | 55 | 55 | 55 |
|    Zinc Oxide | 2.5 | 2.5 | 2.5 | 2.5 | 2.5 | 2.5 |
|    Stearic Acid | 1.5 | 1.5 | 1.5 | 1.5 | 1.5 | 1.5 |
|    Antidegradants | 4.5 | 4.5 | 4.5 | 4.5 | 4.5 | 4.5 |
|    Vulkanol ® 85 | 0 | 0.5 | 1.0 | 1.5 | 2.0 | 3.0 |
| Final | | | | | | |
|    Curatives | 3.42 | 3.42 | 3.42 | 3.42 | 3.42 | 3.42 |
| [1] N330 type carbon black; | | | | | | |

Samples of each of these compounds were then vulcanized at a temperature of about 170°C for about 15 minutes. The physical properties for the resulting vulcanized rubber are shown in Table 2.

| Table 2 | | | | | | |
|---|---|---|---|---|---|---|
| | Comp.B | Exp. 1 | Exp. 2 | Exp. | Exp.4 | Exp. 5 |
| Rheometer | | | | | | |
|    ML, in_lb | 0.99 | 0.97 | 0.99 | 1 | 0.95 | 0.96 |
|    MH, in-lb | 9.06 | 8.87 | 9.31 | 9.16 | 9.17 | 8.94 |
|    ts2 | 4.45 | 3.46 | 4.07 | 3.64 | 3.51 | 3.28 |
|    t-10, min | 3.57 | 2.71 | 3.32 | 2.92 | 2.82 | 2.58 |
|    t-50, min | 5.46 | 4.42 | 5 | 4.5 | 4.36 | 4.09 |
|    t-90, min | 8.99 | 7.7 | 8.15 | 7.52 | 7.29 | 6.96 |
| Stress/Strain | | | | | | |
|    M300 @ RT | 6.547 | 6.13 | 6.415 | 6.325 | 6.1 | 6.229 |
|    TB @ RT | 17.1 | 15.9 | 15.7 | 16.0 | 14.8 | 16.0 |
|    EB @ RT | 589 | 583 | 561 | 575 | 552 | 581 |
| Zwick | | | | | | |
| Resound,% | 59.1 | 59.0 | 59.4 | 59.0 | 58.5 | 59.0 |
|    RT | 65.1 | 63.4 | 54.6 | 64.9 | 65.0 | 65.9 |

(continued)

| Table 2 | | | | | | |
|---|---|---|---|---|---|---|
| | Comp.B | Exp. 1 | Exp. 2 | Exp. | Exp.4 | Exp. 5 |
| 65°C | | | | | | |
| Ozone Testing-Bent Loop Days to Break | No Break | No Break | No Break | No Break | No Break | No Break |

As can be seen by the data contained in Table 2, the physical properties of the black sidewall compound are not significantly affected by the addition of Vulkanol ® 85.

**Examples 6-7, and Comparative Example B**

Comparative Example B (Comp. B) was representative of a carbon black filled sidewall. Experimental Examples 6-7, (Exp. 6-7) were modified versions of this compound, each containing either 0.75 or 1.75 phr Vulkanol ® 85.
Each of Comparative Example B, and Experimental Examples 6 and 7 were mixed in two mix stages. For the first non-productive mix stage, the ingredients were mixed for approximately 120 seconds to a temperature of about 155°C. The resulting rubber composition was then mixed with sulfur curatives, accelerators, antioxidants and optionally Vulkanol ® 85 to a maximum temperature of about 77°C, for about 145 seconds in a final, productive mix stage.
The rubber compositions of this set of Examples were comprised of ingredients listed in Table 3.

| Table 3 | | | |
|---|---|---|---|
| Materials | Comp.B | Exp. 6 | Exp. 7 |
| Masterbatch #1 | | | |
| Butadiene Rubber | 60 | 60 | 60 |
| Natural Rubber | 40 | 40 | 40 |
| Processing Aids | 17 | 17 | 17 |
| Wax | 2 | 2 | 2 |
| Carbon Black | 55 | 55 | 55 |
| Zinc Oxide | 2.5 | 2.5 | 2.5 |
| Stearic Acid | 1.5 | 1.5 | 1.5 |
| Antidegradants | 5 | 5 | 5 |
| Final | | | |
| Curatives | 3.42 | 3.42 | 3.42 |
| Vulkanol ® 85 | 0 | 0.75 | 1.75 |

Tires were then prepared having sidewalls comprised of each of Comp. B, and Exp. 6 and 7. Color and gloss data was obtained according to the test procedures described above. The results of such testing are included in Table 4.

| Table 4 | | | |
|---|---|---|---|
| | Comp. B | Exp. 6 | Exp. 7 |
| Color and Gloss 0 hours Ozone Exposure | | | |
| L | 22.95 | 24.18 | 25.13 |
| a | 0.02 | 0.03 | 0.03 |
| b | -0.36 | -.033 | -0.18 |
| dE | 0.441 | 0.571 | 1.191 |
| Color and Gloss 52 hours Ozone Exposure | | | |
| L | 25.57 | 23.10 | 26.11 |
| a | -0.04 | 0.20 | 0.10 |

(continued)

| Table 4 | | | |
|---|---|---|---|
| | Comp. B | Exp. 6 | Exp. 7 |
| b | 2.54 | 2.45 | -0.54 |
| dE | 0.134 | 0.182 | 0.971 |
| Color and Gloss 116 hours Ozone Exposure | | | |
| L | 23.19 | 19.94 | 25.53 |
| a | 0.25 | 0.42 | 0.13 |
| b | 2.83 | 2.95 | -0.67 |
| dE | 0.356 | 0.384 | 0.968 |
| Color and Gloss 170 hours Ozone Exposure | | | |
| L | 25.11 | 21.72 | 25.43 |
| a | 1.10 | 0.81 | 0.09 |
| b | 6.62 | 5.37 | -0.75 |
| dE | 0.142 | 0.127 | 1.077 |
| Color and Gloss 216 hours Ozone Exposure | | | |
| L | 23.69 | 24.67 | 25.05 |
| a | 1.09 | 0.79 | 0.09 |
| b | 5.49 | 4.82 | -0.67 |
| dE | 0.100 | 0.098 | 1.227 |
| Color and Gloss 280 hours Ozone Exposure | | | |
| L | 22.81 | 22.61 | 24.59 |
| a | 1.21 | 1.24 | 0.10 |
| b | 6.05 | 6.41 | -0.80 |
| dE | 0.091 | 0.081 | 1.114 |

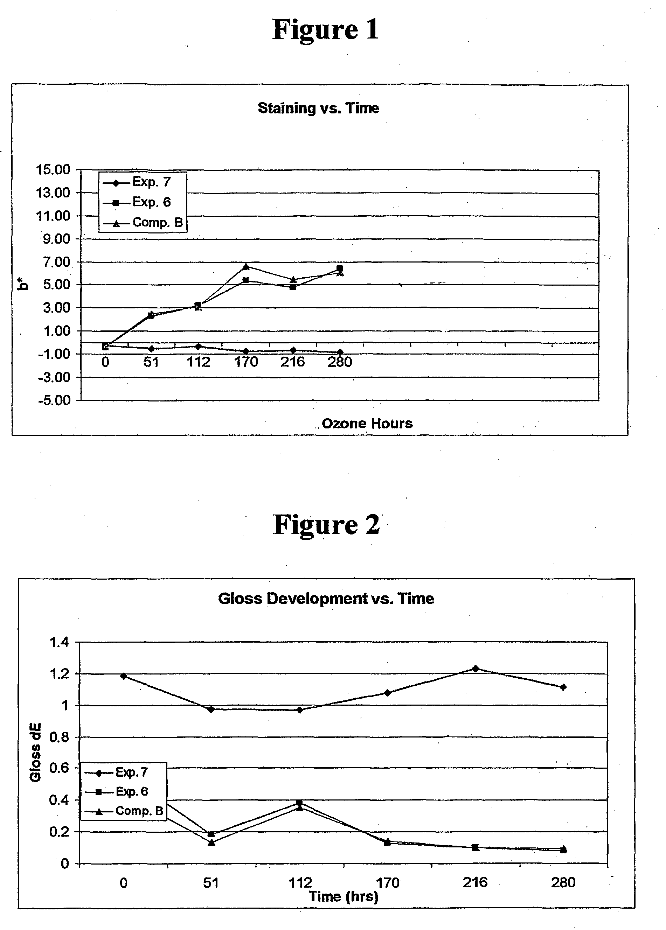

Figure 1 is a plot of staining (b) versus the amount of time the samples were exposed to ozone. As seen from this chart, Compound B and Experimental Compound 6 show an increase in the staining, or discoloration of the rubber surface, as exposure to ozone increases. The plot of b values for Experimental Compound 7 remain virtually unchanged with increasing ozone exposure. This chart demonstrates that increasing levels of Vulkanol ® 85 prevent the surface discoloration of rubber samples.

Figure 2 plots Gloss Development (Gloss dE) of the samples versus the number of hours these samples were in the ozone chamber. Again, the compound with the lower level of Vulkanol ® 85 (Exp. 6) produces data similar to that of the control compound (Comp. B). The compound with higher levels of Vulkanol ® 85 (Exp. 7) displays significantly higher gloss values than either of these compounds.

**Claims**

1. A rubber composition comprising at least a surfactant comprising a thioether functionality and one or more antidegradants;
   wherein the rubber is selected from the group consisting of natural rubber, polyisoprene rubber, styrene butadience rubber, polybutadiene rubber, butyl rubber, halobutyl rubber, crosslinked polyethylene rubber, neoprenes, chlorinated polyethylene rubbers, silicone rubbers, and mixtures thereof.

2. The rubber composition of Claim 1, wherein the surfactant comprises an ether thioether of the formula:

$$H_9C_4-(O-CH_2-CH_2)_n-O-CH_2-CH_2-S-CH_2-O-(CH_2-CH_2-O-)_n-C_4H_9.$$

8

3. An elastomer based rubber composition according to Claim 1, comprising per 100 parts of elastomer about 0.02-10 parts of a surfactant containing a thioether functionality.

4. An elastomer based rubber composition according to Claim 1, comprising per 100 parts of elastomer, about 0.02-10 parts of thioether surfactant.

5. The rubber composition of Claim 3, wherein the elastomer has unsaturation in the polymer backbone.

6. The rubber composition of Claim 3, wherein the surfactant is an ether thioether of the formula:

$$H_9C_4\text{-}(O\text{-}CH_2\text{-}CH_2)_n\text{-}O\text{-}CH_2\text{-}CH_2\text{-}S\text{-}CH_2\text{-}O\text{-}(CH_2\text{-}CH_2\text{-}O\text{-})_n\text{-}C_4H_9.$$

7. A vulcanized tire sidewall comprising the elastomer based rubber composition according to claim 3, wherein the rubber surface of the sidewall is exposed to atmospheric ozone.

8. A tire comprising the vulcanized sidewall of claim 7.

9. A method of forming a film on the exposed surface of the vulcanized tire sidewall of claim 7, comprising: adding about 0.02-10 parts of a surfactant containing a thioether functionality to a rubber composition, curing said rubber composition, exposing the cured rubber composition to ozone.


**Patentansprüche**

1. Kautschukzusammensetzung, die mindestens ein Tensid, das eine Thioetherfunktionalität umfasst, und ein oder mehrere Alterungsschutzmittel umfasst;
wobei der Kautschuk aus der Gruppe bestehend aus Naturkautschuk, Polyisoprenkautschuk, Styrol-Butadien-Kautschuk, Polybutadienkautschuk, Butylkautschuk, Halobutylkautschuk, vernetztem Polyethylenkautschuk, Neoprenen, chlorierten Polyethylenkautschuken, Silikonkautschuken und Gemischen davon ausgewählt ist.

2. Kautschukzusammensetzung nach Anspruch 1, wobei das Tensid einen Etherthioether der folgenden Formel umfasst:

$$H_9C_4\text{-}(O\text{-}CH_2\text{-}CH_2)_n\text{-}O\text{-}CH_2\text{-}CH_2\text{-}S\text{-}CH_2\text{-}O\text{-}(CH_2\text{-}CH_2\text{-}O)_n\text{-}C_4H_9.$$

3. Elastomerbasierte Kautschukzusammensetzung nach Anspruch 1, die pro 100 Teile Elastomer etwa 0,02 - 10 Teile eines Tensids, das eine Thioetherfunktionalität enthält, umfasst.

4. Elastomerbasierte Kautschukzusammensetzung nach Anspruch 1, die pro 100 Teile Elastomer etwa 0,02 - 10 Teile Thioether-Tensid umfasst.

5. Kautschukzusammensetzung nach Anspruch 3, wobei das Elastomer eine Ungesättigtheit in der Polymerhauptkette aufweist.

6. Kautschukzusammensetzung nach Anspruch 3, wobei das Tensid ein Etherthioether der folgenden Formel ist:

$$H_9C_4\text{-}(O\text{-}CH_2\text{-}CH_2)_n\text{-}O\text{-}CH_2\text{-}CH_2\text{-}S\text{-}CH_2\text{-}O\text{-}(CH_2\text{-}CH_2\text{-}O)_n\text{-}C_4H_9.$$

7. Vulkanisierte Reifenseitenwand, die die elastomerbasierte Kautschukzusammensetzung nach Anspruch 3 umfasst, wobei die Kautschukoberfläche der Seitenwand atmosphärischem Ozon ausgesetzt wird.

8. Reifen, der die vulkanisierte Seitenwand nach Anspruch 7 umfasst.

9. Verfahren zum Bilden einer Schicht auf der freiliegenden Oberfläche der vulkanisierten Reifenseitenwand nach Anspruch 7, wobei das Verfahren Folgendes umfasst: Zugeben von etwa 0,02 - 10 Teilen eines Tensids, das eine Thioetherfunktionalität enthält, zu einer Kautschukzusammensetzung, Härten der Kautschukzusammensetzung, Aussetzen der gehärteten Kautschukzusammensetzung gegenüber Ozon.

**Revendications**

1.  Composition de caoutchouc comprenant au moins un tensioactif comportant une fonctionnalité thioéther et un ou plusieurs agents anti-dégradants ;
    le caoutchouc étant choisi dans le groupe constitué par le caoutchouc naturel, le caoutchouc polyisoprène, le caoutchouc styrène-butadiène, le caoutchouc polybutadiène, le caoutchouc butyle, le caoutchouc halogénobutyle, le caoutchouc polyéthylène réticulé, les néoprènes, les caoutchoucs polyéthylène chloré, les caoutchoucs silicone, et leurs mélanges.

2.  Composition de caoutchouc selon la revendication 1, dans lequel le tensioactif comprend un éther thioéther de la formule :

$$H_9C_4\text{-}(O\text{-}CH_2\text{-}CH_2)_n\text{-}O\text{-}CH_2\text{-}CH_2\text{-}S\text{-}CH_2\text{-}O\text{-}(CH_2\text{-}CH_2\text{-}O\text{-})_n\text{-}C_4H_9.$$

3.  Composition de caoutchouc à base d'élastomère selon la revendication 1, comprenant pour 100 parties d'élastomère environ 0,02 à 10 parties d'un tensioactif comportant une fonctionnalité thioéther.

4.  Composition de caoutchouc à base d'élastomère selon la revendication 1, comprenant pour 100 parties d'élastomère environ 0,02 à 10 parties de tensioactif thioéther.

5.  Composition de caoutchouc selon la revendication 3, dans lequel l'élastomère présente une insaturation dans le squelette polymère.

6.  Composition de caoutchouc selon la revendication 3, dans lequel le tensioactif est un éther thioéther de la formule :

$$H_9C_4\text{-}(O\text{-}CH_2\text{-}CH_2)_n\text{-}O\text{-}CH_2\text{-}CH_2\text{-}S\text{-}CH_2\text{-}O\text{-}(CH_2\text{-}CH_2\text{-}O\text{-})_n\text{-}C_4H_9.$$

7.  Flanc de bandage pneumatique vulcanisé comprenant la composition de caoutchouc à base d'élastomère selon la revendication 3, dans lequel la surface du caoutchouc du flanc est exposée à de l'ozone atmosphérique.

8.  Bandage pneumatique comprenant le flanc vulcanisé selon la revendication 7.

9.  Procédé de formation d'un film sur la surface exposée du flanc vulcanisé du bandage pneumatique selon la revendication 7, comprenant : l'addition d'environ 0,02 à 10 parties d'un tensioactif comportant une fonctionnalité thioéther à une composition de caoutchouc, le durcissement de ladite composition de caoutchouc, l'exposition de la composition de caoutchouc durcie à de l'ozone.

# Figure 1

Staining vs. Time

# Figure 2

Gloss Development vs. Time

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6554037 B
- US 6598632 B

- US 133546 A